# EUROPÄISCHE PATENTSCHRIFT

(11) **EP 1 704 763 B1**
(45) Veröffentlichungstag und Bekanntmachung des Hinweises auf die Patenterteilung: **02.04.2008**
(21) Anmeldenummer: 06005442.6
(22) Anmeldetag: 17.03.2006
(51) Int. Cl.: A01C 7/04

(54) **Vorrichtung zum Abstreifen von überschüssigen Samenkörnern**
Device for removal of surplus seed
Dispositif pour écarter des graines exédentaires

(30) Priorität: 23.03.2005 DE 102005013399
(43) Veröffentlichungstag der Anmeldung: 27.09.2006
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Wiebusch, Thorsten, 49205 Hasbergen (DE)

(56) Entgegenhaltungen:
- DE-A1- 2 826 658
- FR-A- 2 641 441
- US-B1- 6 516 733

## Beschreibung

Die Erfindung betrifft eine Vorrichtung zum Abstreifen vom überschüssigen Samenkörnern gemäß des Oberbegriffes des Patentanspruches 1.

Eine Vorrichtung zum Abstreifen von überschüssigen Samenkörnern ist beispielsweise in der EP 0 598 636 B1 beschrieben. Bei dieser Vorrichtung sind die Abstreiferelemente als Stifte ausgebildet und an einem schwenkbar gelagerten Hebel angeordnet. An dem Hebel befindet sich eine drehbare Rolle die an der Trommel zur Anlage kommt, um so sicher zu stellen, dass die Enden der Stifte der Abstreiferelemente den vorgeschriebenen Abstand zur Trommel einhalten.

Die FR 2 641 441 A1 zeigt eine Vorrichtung zum Abstreifen von überschüssigen Körnern. Bei dieser Vorrichtung sind die Abstreiferelemente als Lamellen ausgebildet. Sie können in einer Ausführungsform teilweise elastisch sein oder in einer anderen Ausführung mittels einer mit einer Feder beaufschlagten Schiebeführung an der Trommel zur Anlage gebracht werden.

Diese Anordnung ist relativ aufwendig.

Der Erfindung liegt die Aufgabe zugrunde, ein einfach ausgestaltetes und sich an die Trommelaußenkontur anlehnendes Abstreiferelement zu schaffen.

Diese Aufgabe wird erfindungsgemäß durch das kennzeichnende Merkmal des Patentanspruches 1 gelöst. Aufgrund des aus einem elastischen Material bestehenden Abstreiferelementes kann dieses sich an der Trommelaußenseite anlegen und der Außenkontur der Trommel und der Scheibe folgen. Hierdurch können Fertigungsungenauigkeiten und Unrundheiten bzw. Unplanheiten der Trommel oder Scheibe von dem aus elastischen Material bestehenden Abstreiferelement ausgeglichen werden. Hierbei ist nach der Erfindung vorgesehen, dass das zumindest teilweise aus einem elastischen Material bestehende Abstreiferelement sich an die Trommel - oder Scheibenkontur flexibel anpassend ausgebildet ist.

Um eine ausreichende Festigkeit kombiniert mit der flexiblen Anpassung des Abstreiferelementes zu erreichen, ist vorgesehen, dass das den Abstreiferbereich bildende und aus einem elastischen Bereich bestehende Segment des Abstreiferelementes an einem aus steiferem oder festem Material bestehenden Halter angeordnet ist.

Eine besonders gute Ausgestaltung des Abstreiferbereiches ergibt sich dadurch, dass der Abstreiferbereich lippenartig ausgebildet ist.

Um ein ausreichend langen Abstreiferbereich zu erhalten sowie den Abstreifer an die jeweils gegebene Gegebenheit gut anpassend einstellen zu können, ist vorgesehen, dass das Abstreiferelement feststehend angeordnet ist.

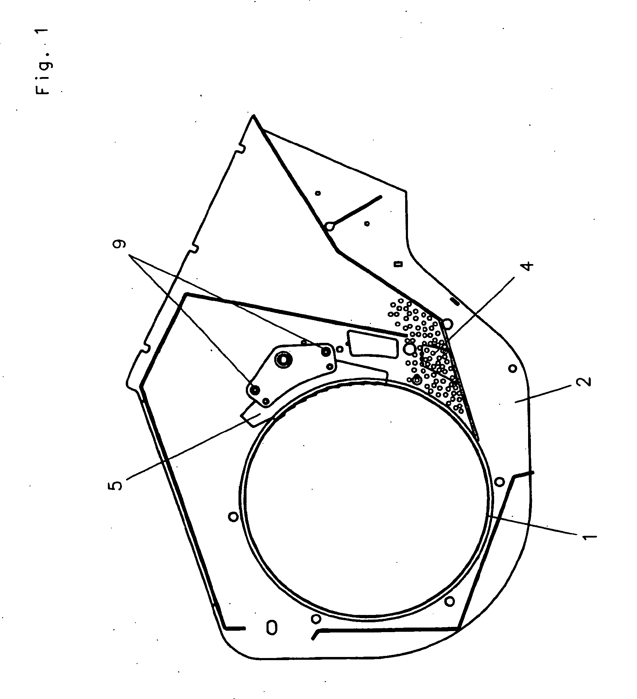

Weitere Einzelheiten der Erfindung ist der Beispielsbeschreibung und den Zeichnungen zu entnehmen. Hierbei zeigen
- Fig. 1: die Anordnung der Trommel in der Ansicht I/I in Teilansicht der Einzelkornsämaschine,

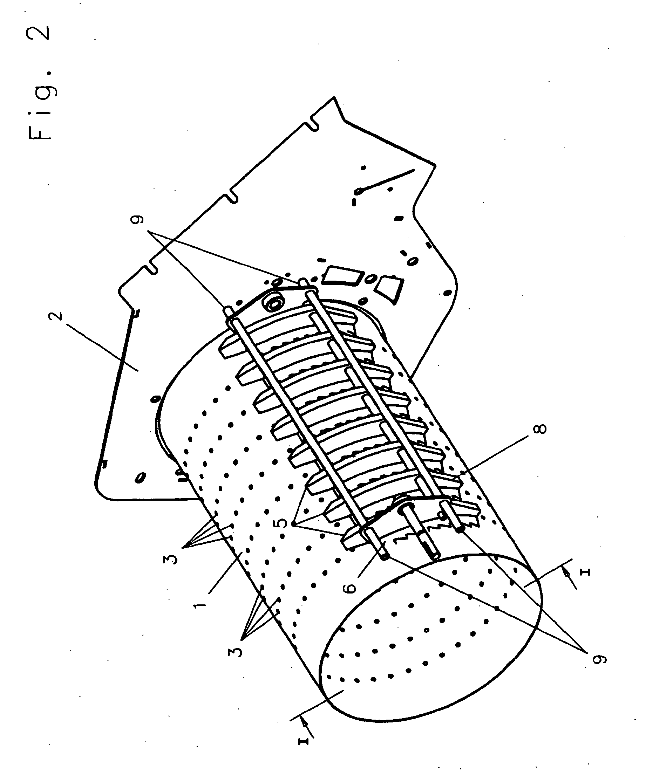

- Fig. 2: die Anordnung der Trommel in dem Vereinzelungsgehäuse in perspektivischer Darstellung und Teilansicht und

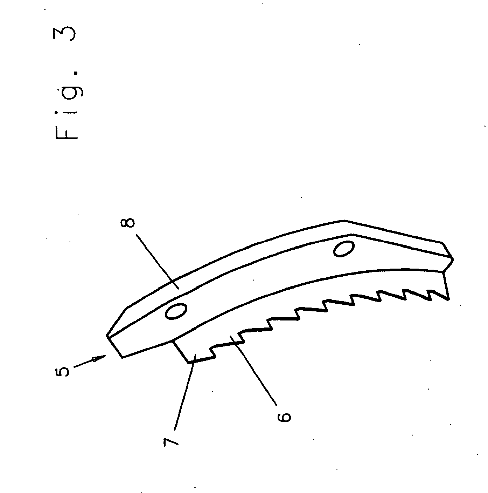

- Fig. 3: ein Abstreifer in vergrößerter Darstellung.

Die als Vereinzlungstrommel 1 ausgebildete Vereinzelungseinrichtung ist in dem teilweise dargestellten Gehäuse 2 drehbar gelagert und rotierend angetrieben angeordnet. Der Vereinzlungstrommel 1 ist ein nicht dargestellter Vorratsbehälter und eine Luftdruckerzeugungseinrichtung, beispielsweise ein Gebläse zugeordnet. In der Trommel 1 sind die Aussaatöffnungen 3 in mehreren umlaufenden kreisförmig angeordneten Reihen angeordnet, wobei die Aussaatöffnungen 3 über die Druckerzeugungseinrichtung mit einem Druckunterschied beaufschlagt werden, so dass sich die im Saatgutvorrat 4 des Vorratsbehälters befindlichen Saatkörner aufgrund des Druckunterschiedes an den Aussaatöffnungen 3 anlagern können. Hierbei kann entweder auf der Innenseite der Trommel 1 ein Unterdruck oder auf der Außenseite der Trommel ein Überdruck erzeugt werden, so dass sich die Samenkörner auf der Außenseite der Trommel 1 an den Aussaatöffnungen 3 aufgrund des erzeugten Druckunterschiedes anlagern.

In einem Abstand zu dem Anlagerungsbereich, das heißt zu dem Bereich, in dem die Saatguttrommel 1 durch den Saatgutvorrat 4 geführt wird, ist auf der Außenseite der Trommel 1 die mehrere Abstreiferelemente 5 aufweisende Abstreifereinrichtung 6 angeordnet. Jeder Reihe von Aussaatöffnungen 3 ist ein Abstreiferelement 5 zugeordnet. Die Abstreiferelemente 5 bestehen zumindest in dem an der Trommel 1 anliegenden Bereich 6 aus einem elastischen Material. Das zumindest teilweise aus einem elastischen Material 6 bestehende Abstreiferelement 5 ist sich an die Trommel- oder Scheibenkontur der Trommel 1 flexibel anpassend ausgebildet. Aufgrund der Eigenelastizität des Abstreiferelementes 5 ist dieses federbelastet gegen die Trommel 1 anliegend angeordnet. Der Abstreiferbereich 6 des Abstreiferelementes 5 ist lippenartig ausgebildet. Um eine exakte Ausrichtung des lipartigen Abstreiferbereiches 5 zu den kreisförmig angeordneten Aussaatöffnungen 3 einer Reihe von Aussaatöffnungen 3 zu gewährleisten, ist das den Abstreiferbereich 6 bildende und aus einem elastischen Material bestehende Segment 7 des Abstreiferelementes 5 an einem aus einem steiferen oder festeren Material bestehenden Halter 8 angeordnet. Diese beiden Bereiche 6, 7 und 8 können einstückig ausgebildet sein oder aus zwei Teilstücken bestehen, die beispielsweise durch Kleben oder einem anderen Befestigungsmittel miteinander verbunden sind.

Die einzelnen Abstreiferelemente 5 sind auf einer gemeinsamen Halterung 9 angeordnet und können gemeinsam gegenüber den Aussaatöffnungen 3 verstellt werden. Hierbei erfolgt die Verstellung so, dass zuviel an jeder Aussaatöffnung 3 angelagerte Samenkörner abgestreift werden, so dass Nachpassieren des jeweiligen Abstreiferelementes 5 an der jeweiligen Aussaatöffnung 3 einer Reihe nur ein Saatkorn anlagert ist.

## Patentansprüche

1. Vorrichtung zum Abstreifen von überschüssigen Samenkörnern von den in einer rotierenden Trommel oder Scheibe angebrachten und mit einem Druckunterschied beaufschlagten Aussaatöffnungen einer Einzelkornsämaschine, wobei die Aussaatöffnungen in zumindest einer Reihe angeordnet sind, wobei jeder Reihe von Aussaatöffnungen zumindest ein an der Trommel oder Scheibe im Bereich der Aussaatöffnungen zumindest teilweise anliegendes und zumindest teilweise elastisches Abstreiferelement zugeordnet ist, **dadurch gekennzeichnet, dass** das Abstreiferelement (5) zumindest in seinem an der Trommel (1) oder Scheibe anliegenden Bereich aus einem elastischen Material (6, 7) besteht, und dass das Abstreiferelement (5) federbelastet durch Eigenelastizität des Materials (6, 7) gegen die Trommel (1) oder Scheibe anliegend angeordnet ist.

2. Vorrichtung nach Anspruch 1, **dadurch gekennzeichnet, dass** das zumindest teilweise aus einem elastischen Material (6, 7) bestehende Abstreiferelement (5) sich an die Trommel- oder Scheibenkontur der Trommel (1) oder Scheibe flexibel anpassend ausgebildet ist.

3. Vorrichtung nach einem oder mehreren der vorstehenden Ansprüche, **dadurch gekennzeichnet, dass** das den Abstreiferbereich bildende und aus einem elastischen Bereich bestehende Segment (6, 7) des Abstreiferelementes (5) an einem aus steiferem oder festem Material bestehenden Halter (8) angeordnet ist.

4. Vorrichtung nach einem oder mehreren der vorstehenden Ansprüche, **dadurch gekennzeichnet, dass** der Abstreiferbereich (6, 7) lippenartig ausgebildet ist.

5. Vorrichtung nach Anspruch 1, **dadurch gekennzeichnet, dass** das Abstreiferelement (5) feststehend angeordnet ist.

## Claims

1. Apparatus for scraping surplus grains of seed from the sowing openings of a single seeder seed drill, the said sowing openings being provided in a rotating drum or disc and being impinged upon by a pressure differential, wherein the sowing openings are disposed in at least one row, wherein a scraper element, which abuts at least partially against the drum or disc in the region of the sowing openings and is at least partially resilient, is associated with each row of sowing openings, **characterised in that** the scraper element (5) is produced from a resilient material (6, 7) at least in its region abutting against the drum (1) or disc, and **in that** the scraper element (5) is disposed abutting against the drum (1) or disc in a spring-loaded manner through the inherent resilience of the material (6, 7).

2. Apparatus according to claim 1, **characterised in that** the scraper element (5) that is produced at least partially from a resilient material (6, 7) is designed to adapt in a flexible manner to the contour of the drum (1) or disc.

3. Apparatus according to one or more of the preceding claims, **characterised in that** the segment (6, 7) of the scraper element (5) that forms the scraper region and is produced from a resilient region is disposed on a holder (8) that is produced from a more rigid or solid material.

4. Apparatus according to one or more of the preceding claims, **characterised in that** the scraper region (6, 7) is lip-like.

5. Apparatus according to claim 1, **characterised in that** the scraper element (5) is disposed in a fixed manner.

## Revendications

1. Dispositif pour racler les graines de semence en excédent d'un tambour ou disque en rotation et ayant des orifices de prélèvement de semence soumis à une différence de pression dans un semoir de précision,
les orifices de prélèvement de semence étant répartis au moins sur une rangée,
à chaque orifice de prélèvement de semence est associé un élément de raclage appliqué au moins en partie contre le tambour ou le disque au niveau des orifices de prélèvement, cet élément de raclage étant au moins en partie élastique,
**caractérisé en ce que**
l'élément de raclage (5) dans sa zone appliquée contre la tambour (1) ou le disque, est en une matière élastique (6, 7) et
l'élément de raclage (5), chargé par ressort par l'élasticité propre de la matière (6, 7), est appliqué contre le tambour (1) ou un disque.

2. Dispositif selon la revendication 1,
**caractérisé en ce que**
la matière (6, 7) au moins en partie élastique formant l'élément de raclage (5) est ajustée au contour du tambour (1) ou d'un disque par un appui souple adapté.

3. Dispositif selon l'une ou plusieurs des revendications précédentes,
**caractérisé en ce que**
le segment (67) de l'élément de raclage (5) qui forme la plage de raclage et se compose d'une plage élastique, est prévu sur un support (8) plus rigide ou en une matière solide.

4. Dispositif selon l'une ou plusieurs des revendications précédentes,
**caractérisé par**
la plage de raclage (6, 7) en forme de lèvres.

5. Dispositif selon la revendication 1,
**caractérisé en ce que**
l'élément de raclage (5) est monté de manière fixe.
